Europäisches Patentamt

European Patent Office

Office européen des brevets

(11) Numéro de publication : **0 007 269**
**B1**

## (12) FASCICULE DE BREVET EUROPÉEN

(45) Date de publication du fascicule du brevet :
03.11.82

(51) Int. Cl.³ : **C 04 B 13/02, C 04 B 35/14**

(21) Numéro de dépôt : 79400439.0

(22) Date de dépôt : 29.06.79

(54) **Composition pulvérulente, béton comprenant cette composition et procédé d'obtention de pièces à partir de ce béton.**

(30) Priorité : 29.06.78 FR 7819459

(43) Date de publication de la demande :
23.01.80 (Bulletin 80/02)

(45) Mention de la délivrance du brevet :
03.11.82 Bulletin 82/44

(84) Etats contractants désignés :
BE DE GB IT

(56) Documents cités :
DE A 2 230 746
DE C 933 977
US A 2 038 367
US A 2 410 954

CHEMICAL ABSTRACTS, vol. 81, 18-11-1974,
no. 20, page 376 Columbus, Ohio, USA

CHEMICAL ABSTRACTS, vol. 84, 1976 ref.
139833b, page 291 Columbus, Ohio, USA

(73) Titulaire : Sté **CARBONISATION ENTREPRISE ET CERAMIQUE**
99, Avenue Aristide Briand B.P. 560
F-92542 Montrouge Cedex (FR)

(72) Inventeur : **Le Paslier, Pierre**
72, rue Bleuzen
**Vanves (Hauts de Seine) (FR)**
Inventeur : **Provost, Gilbert**
1, rue du Lieutenant Girbal
**Les Breviaires (Yvelines) (FR)**

(74) Mandataire : **Rataboul, Michel**
69, rue de Richelieu
F-75002 Paris (FR)

Imprimerie Jouve, 18, rue St-Denis, 75001 Paris, France

# 0 007 269

### Composition pulvérulente, béton comprenant cette composition et procédé d'obtention de pièces à partir de ce béton.

La présente invention concerne une composition pulvérulente à partir de laquelle on obtient un béton qui, après moulage et cuisson, donne des pièces de qualités comparables à celles des briques de silice actuelles.

En d'autres termes, l'invention permet d'avoir une composition pulvérulente facile à obtenir et à stocker, un béton obtenu en mélangeant cette composition avec des agrégats de silice voulus, un mélange qui peut être gâché avec peu d'eau, des pièces démoulées et crues qui peuvent facilement être stockées et des pièces cuites qui répondent exactement aux exigences voulues quels que soient leur complexité et/ou leur volume.

L'homme de métier sait que l'on ne peut confondre la silice et le quartz comme cela sera de toutes façons mis en évidence plus loin.

De plus, pour des raisons qui seront également expliquées plus loin, l'invention ne peut être mise en application que si la quantité de ciment alumineux introduite dans la composition pulvérulente est telle que la teneur en alumine de cette dernière est inférieure à 10 % en poids.

On connaît ainsi le brevet US 2 038 367 et la demande allemande publiée 2 230 746 dont il n'est pas nécessaire de faire l'analyse détaillée, du fait que ces documents décrivent des compositions contenant un ciment alumineux dans des proportions si différentes de celles de l'invention, que les compositions sont de nature différente.

Le brevet US 2 410 954 décrit un liant à base de ciment Portland (95 %) et de silice très fine (5 %) qui est destiné à l'obtention de bétons de génie civil. Différents ajouts sont prévus tels que de la chaux ou des cendres volantes contenant de l'oxyde de fer. Ces dernières sont incompatibles, comme on le sait, avec la réfractarité puisqu'elles fondent à basse température. La teneur en chaux de ce béton de génie civil est élevée, ce qui est inacceptable pour l'obtention de produits réfractaires.

Les bétons réfractaires conformes à l'invention ne contiennent, au contraire, qu'un maximum de 3,5 % en poids de chaux.

Le brevet US 3 880 664 concerne un procédé d'extrusion d'un béton d'amiante selon lequel on ajoute de la silice volatilisée pour constituer un plastifiant.

Ceci est contraire à la présente invention qui concerne un liant pouvant être associé à un agrégat de silice naturelle.

Ce brevet décrit des compositions qui sont étrangères à l'invention, ce qui montre l'absence de parenté et l'inopposabilité de ce brevet comme antériorité.

L'extrait 84 de « CHEMICAL ABSTRACTS » volume 84 décrit une brique de silice liée classiquement à la chaux avec ajout d'un dispersant, mais ne concerne pas une composition contenant un liant hydraulique (ciment). Une brique n'est évidemment pas mise en forme comme un béton coulé et vibré.

L'extrait 126 142 de « CHEMICAL ABSTRACTS », volume 81, décrit une brique de silice à base de quartzite calcinée à 1 050-1 250 °C liée au lait de chaux avec ajout de $Fe_2O_3$ comme minéralisateur.

Cela illustre l'état de la technique concernant la fabrication des briques de silice et ne concerne pas la présente invention, l'absence du ciment démontrant que le matériau est totalement différent.

Le brevet allemand 933 977 décrit une composition à base de silice vitreuse dont les propriétés ne sont pas comparables avec celles de l'agrégat à base de quartz, caractéristique de la présente invention.

Le coefficient de dilatation de la silice vitreuse est voisin de zéro alors que celui du quartz en est très éloigné.

De plus, le mélange décrit dans ce brevet n'est pas défloculé et l'agrégat n'est pas du quartz mais de la silice vitreuse.

Il s'agit d'un matériau différent de celui qui fait l'objet de la présente invention puisqu'il ne contient ni agrégat de silice naturelle, ni silice volatilisée, ni agent défloculant.

Les produits obtenus avec ce matériau ont des caractéristiques très inférieures à celles des produits conformes à la présente invention.

L'examen de ces documents montre que le principe de l'association de ciment de Portland et de silice volatilisée n'est connu que pour des produits étrangers à ceux de la présente invention, à savoir des bétons de génie civil dépourvus de toute réfractarité. Or, on démontre sans peine que les phénomènes mis en jeu par l'invention sont différents, et donc nouveaux, par rapport à ces documents.

L'invention sera bien comprise par la description détaillée ci-après, étant précisé que l'expression « silice naturelle » utilisée ci-après signifie, en réalité, tout agrégat naturel à base de silice déjà connu de l'homme de métier comme utilisable pour l'obtention de briques de silice et tel que les quartzites et les grès.

Selon l'invention on obtient une composition pulvérulente, pour utilisation dans la fabrication de béton réfractaire, comprenant un liant hydraulique, un minéralisateur, un plastifiant constitué de silice fine et un défloculant en prenant soin que, par rapport à son poids total, cette composition ne contienne pas plus de 10 % d'alumine et en prévoyant que le liant hydraulique ne dépasse pas 65 % de ce poids, que le minéralisateur est choisi parmi ceux qui favorisent les transformations minéralogiques de la silice (chaux par exemple) ce minéralisateur représentant 10 à 60 % du poids de la composition, en choisissant comme plastifiant une silice dont les grains ont une surface spécifique d'au moins $0,8 \ m^2 \cdot g^{-1}$ mesurée

2

par la méthode BLAINE et cela dans la proportion de 10 à 80 % du poids de la composition et, enfin, en choisissant le défloculant parmi ceux qui sont stables en présence du liant hydraulique et du minéralisateur tout en étant actif en milieu aqueux de pH compris entre 10,5 et 13, ce défloculant étant présent dans la proportion d'au moins 0,6 % en poids.

Le but de l'invention, comme indiqué plus haut, est d'obtenir des pièces réfractaires cuites qui ont des caractéristiques analogues à celles des briques de silice actuelles fabriquées à partir de pâtes sèches par pressage ou damage et, cela, à partir d'un béton que l'on met en forme dans des moules par coulage et vibration.

Les pièces réfractaires ainsi obtenues ont une excellente homogénéité et n'ont aucune tension interne comme cela se produit actuellement quand elles doivent être de volume et/ou de formes complexes.

L'invention présente un avantage supplémentaire du fait que l'outillage pour la mise en œuvre du béton est beaucoup plus simple et beaucoup moins cher que celui qui est nécessaire à la mise en œuvre de pâtes sèches.

Une composition conforme à l'invention permet donc de réaliser des pièces importantes, ce qui revient à une sorte de préfabrication d'ensembles volumineux et dont l'assemblage ultérieur est plus rapide et moins coûteux. En outre, cela diminue le nombre de joints, ce qui est un avantage certain car les joints, dans une enceinte thermique, constituent des points faibles qui sont souvent à l'origine d'incidents qui peuvent aller jusqu'à la mise hors service prématurée de l'enceinte thermique.

La silice est l'élément fondamental qui doit constituer les pièces car à elle seule elle présente, comme cela est bien connu, des avantages marqués, tant vis-à-vis des conditions thermiques que des conditions mécaniques de son utilisation.

Tous les autres composés ne sont associés à la silice que pour lui donner l'ouvrabilité, la tenue et la consistance voulue.

Mais, pour avoir les qualités voulues, une pièce de silice doit être cuite. Or, l'homme de métier sait que la silice présente d'une part, une dilatation permanente lors de la cuisson et, d'autre part, une dilatation réversible qui se produit, non seulement lors de la cuisson, mais chaque fois que la pièce est refroidie et chauffée, en raison de la présence du quartz résiduel. Il est donc capital de provoquer la transformation minéralogique de la silice lors de la cuisson de la pièce pour qu'il reste aussi peu de quartz résiduel que possible : moins de 10 % et même, de préférence, moins de 5 %.

L'effet dilatométrique du quartz, en se transformant de quartz $\alpha$ en quartz $\beta$ aux environs de 573 °C, est très élevé et plus la quantité de quartz non transformé en cristobalite et/ou en tridymite est importante, plus la pièce se dilaterait lorsqu'elle serait soumise aux fortes températures de cuisson thermique, ce qui pourrait provoquer des déformations ou des éclatements inadmissibles des parois construites avec de telles pièces.

Cette transformation suppose donc la présence d'au moins un minéralisateur de la silice. Parmi les minéralisateurs connus, on peut citer les composés de calcium tels que la chaux et les oxydes de fer.

L'homme de métier sait ainsi, qu'en préparant un béton de silice avec du ciment Portland comme liant hydraulique, les composés de calcium de ce ciment provoqueraient la minéralisation de la silice.

Mais, l'état de la technique montre que la quantité normale de ciment Portland serait telle qu'il y aurait trop de composés de calcium. En effet, ces composés de calcium forment tous, en combinaison à chaud avec la silice, des composés nouveaux, tels que des eutectiques, qui présentent alors des caractéristiques inférieures à celles de la silice (bas point de fusion, faible résistance mécanique, etc...) et il faut, par conséquent, qu'il s'en trouve le moins possible.

Lorsque le minéralisateur est la chaux, il faut, par exemple, dans la plupart des cas, qu'elle ne dépasse pas 3,5 % du poids total du béton (liant + agrégat). S'il y en avait beaucoup plus, on formerait dans le béton une trop grande quantité de ces composés plus fusibles.

Par ailleurs, l'obtention de pièces à partir d'un béton coulé dans les moules suppose, bien évidemment, que le mélange soit relativement fluide mais, simultanément, il faut prévoir le minimum d'eau pour obtenir un séchage rapide et éviter les occlusions qui contribuent à créer une grande porosité ce qui est un inconvénient majeur.

Enfin, il faut prévoir de démouler les pièces au bout d'un temps relativement court et, si possible, en évitant le séchage, de sorte qu'il faut utiliser une prise hydraulique pour donner à la pièce la cohésion voulue.

Grâce à l'invention, on arrive à concilier toutes ces conditions difficilement compatibles.

On utilise pour la composition pulvérulente, un liant hydraulique riche en calcium et en faisant en sorte que les composés de calcium apportés par ce liant soit dans la proportion voulue ou, si cette proportion est trop faible, en ajoutant un minéralisateur qui vient compléter l'action des composés de calcium pour obtenir la transformation minéralogique de la silice.

On choisit comme étant bien adapté à cette solution, un liant hydraulique qui est un ciment du type Portland auquel on peut ajouter une faible proportion de ciment alumineux si l'on désire accélérer la prise pour démouler rapidement. Cependant, on doit prendre soin que l'alumine représente au plus 2 % du poids total du béton car l'association silice-alumine-chaux conduit à des produits très médiocrement réfractaires.

On maintient au-dessous du seuil critique la quantité de calcium en n'utilisant qu'une faible quantité de ciment et, pour obtenir une bonne ouvrabilité ainsi que de bonnes caractéristiques des pièces cuites, on ajoute un plastifiant tel que la silice fine.

On parvient à n'utiliser qu'une faible quantité d'eau grâce à la présence d'un défloculant qui, par exemple, peut être choisi dans la famille des polynaphtylméthanes sulfonates et en appliquant une vibration au moment du coulage.

Cette composition constitue le liant d'un béton auquel on associe un agrégat sec constitué de silice naturelle dont la teneur en silice exprimée en $SiO_2$ est au moins égale à 90 % alors que la composition pulvérulente représente au plus 20 % environ du poids total du béton.

Selon une caractéristique de l'invention, le minéralisateur est constitué, au moins en partie, par une fraction du liant hydraulique de sorte que deux composants sont confondus, au moins partiellement, en un seul.

Ainsi une telle composition est caractérisée en ce que le liant hydraulique est du type ciment Portland et que le minéralisateur est constitué en partie par des composés de calcium provenant du ciment et en partie par au moins un autre élément choisi parmi les minéralisateurs favorisant les transformations minéralogiques de la silice tel que l'oxyde de fer.

Selon une variante de cette composition, le liant hydraulique est du type ciment Portland et le minéralisateur n'est constitué que par des composés de calcium provenant du ciment.

L'invention a également pour objet un béton comprenant la composition définie plus haut et un agrégat sec de silice naturelle, dont la teneur en silice exprimée en $SiO_2$ est au moins égale à 90 %, la composition représentant au plus 20 % environ du poids total du béton réfractaire pour que la chaux soit présente à raison d'au plus 3,5 % du poids total de béton, et l'alumine à raison d'au plus 2 %.

L'invention concerne également un procédé pour l'obtention d'une pièce en béton réfractaire qui consiste à gâcher un béton selon l'invention avec de l'eau, puis à couler et vibrer ce mélange dans un moule puis à démouler la pièce.

Selon l'invention, une telle pièce est cuite et présente une teneur en quartz résiduel au plus égale à 10 % et de préférence inférieure à 5 %.

L'invention s'étend à toute enceinte thermique réalisée par assemblage de pièces obtenues selon le procédé ci-dessus.

On va maintenant citer deux exemples :

### Exemple 1

Une composition pulvérulente selon l'invention comprend les quatre constituants suivants, les proportions étant exprimées en poids :

— Liant hydraulique :
Ciment Portland      22 à 52 %
— Minéralisateur :
Composés de calcium inclus dans le ciment (exprimé en CaO)      15,5 à 36 %
Addition d'oxyde de fer en poudre (exprimé en $Fe_2O_3$)      1,5 à 24 %
— Plastifiant :
Silice fine de surface spécifique Blaine au moins égale à 0,8 $m^2 \cdot g^{-1}$      15 à 60 %
— Défloculant :
Polynaphtylméthane sulfonate      1,5 à 15 %

Cette composition doit être associée à un agrégat de silice naturelle pour constituer un béton. La composition de ce béton est alors :

— Liant hydraulique :
Ciment Portland      3 à 7 %
— Minéralisateur :
Composé de calcium inclus dans le ciment      —
Addition d'oxyde de fer en poudre (exprimé en $Fe_2O_3$)      0,2 à 3 %
— Plastifiant :
Silice fine de surface spécifique Blaine au moins égale à 0,8 $m^2 \cdot g^{-1}$      2 à 8 %
— Défloculant :
Polynaphtylméthane sulfonate      0,1 à 3 %
— Agrégat :
Silice naturelle      83 à 95 %

On note que dans cet exemple, le minéralisateur est constitué en partie de composés de calcium inclus dans le ciment et en partie d'un oxyde de fer en poudre qui est ajouté.

Les composants précis sont les suivants :

— Liant hydraulique :

4

| | | |
|---|---|---|
| Ciment Portland CPA 400 HTS | 6 | % en poids |
| — Minéralisateur : | | |
| Composés de calcium inclus dans le ciment | — | |
| Oxyde de fer en poudre exprimé en $Fe_2O_3$ | 1 | % en poids |
| — Plastifiant : | | |
| Silice fine de surface spécifique Blaine de 1,2 $m^2 \cdot g^{-1}$ | 6 | % en poids |
| — Défloculant : | | |
| Polynaphtylméthane sulfonate | 0,3 | % en poids |
| — Adjuvant tensio-actif (compté en ajout au total) : | | |
| Lignosulfonate à faible teneur en sucre additionné d'un antiferment et d'antimoussant | 0,35 | % en poids |
| — Agrégat de silice naturelle : | | |
| Quartzite de Villenauxe de 2 à 5 mm | 27 | % en poids |
| Quartzite de Villenauxe de 1 à 2 mm | 14 | % en poids |
| Quartzite de Villenauxe inférieur à 0,4 mm | 34 | % en poids |
| Grès d'Hautrage impalpable | 11,7 | % en poids |

Ce béton est gâché avec 7,2 % d'eau puis on procède à son moulage par coulage et vibration.

Les pièces obtenues sont démoulées et séchées puis cuites. Elles sont alors aptes à être assemblées pour constituer des éléments de construction d'enceintes thermiques.

Les pièces crues obtenues ont les caractéristiques suivantes déterminées après étuvage :

| | |
|---|---|
| Masse volumique apparente | 2,18 $g \cdot cm^{-3}$ |
| Porosité ouverte | 15,3 % |
| Résistance à l'écrasement à froid | 602 $dN \cdot cm^{-2}$ |
| Module de rupture à la flexion à froid | 88 $dN \cdot cm^{-2}$ |

## Exemple 2

Une composition pulvérulente selon l'invention comprend les quatre constituants suivants, les proportions étant exprimées en poids :

| | |
|---|---|
| — Liant hydraulique : | |
| Ciment Portland | 32 à 64 % |
| — Minéralisateur : | |
| Composés de calcium inclus dans le ciment (exprimé en CaO) | 22 à 44 % |
| — Plastifiant : | |
| Silice fine de surface spécifique Blaine au moins égale à 0,8 $m^2 \cdot g^{-1}$ | 16 à 64 % |
| — Défloculant : | |
| Polynaphtylméthane sulfonate de sodium | 1,2 à 10 % |

Cette composition doit être associée à un agrégat de silice naturelle pour constituer un béton. La composition de ce béton est alors :

| | |
|---|---|
| — Liant hydraulique : | |
| Ciment Portland | 4 à 8 % |
| — Minéralisateur : | |
| Composés de calcium | inclus dans le ciment |
| — Plastifiant : | |
| Silice fine de surface spécifique Blaine au moins égale à 0,8 $m^2 \cdot g^{-1}$ | 2 à 8 % |
| — Défloculant : | |
| Polynaphtylméthane sulfonate de sodium | 0,1 à 3 % |
| — Agrégat : | |
| Silice naturelle | 83 à 95 % |

On note que le minéralisateur est constitué entièrement par les composés de calcium que contient le ciment Portland.

Selon ce deuxième exemple, les composants précis sont les suivants :

| | | |
|---|---|---|
| — Liant hydraulique : | | |
| Ciment Portland CPA 400 HTS | 4 | % en poids |
| — Minéralisateur : | | |
| inclus dans le ciment | — | |
| — Plastifiant : | | |
| Silice fine de surface spécifique Blaine de 1,2 $m^2 \cdot g^{-1}$ | 6 | % en poids |

— Défloculant :
Polynaphtylméthane sulfonate 0,3 % en poids
— Adjuvant tensio-actif :
Lignosulfonate à faible teneur en sucre additionné d'un anti-ferment et
d'antimoussant (compté en ajout du total) 0,02 % en poids
— Agrégat de silice naturelle :
Grès silicieux d'Hautrage de 1 à 2 mm 15 % en poids
Silex de Ghlin de 1 à 2 mm 22 % en poids
Grès silicieux d'Hautrage inférieur à 1 mm 5 % en poids
Silex de Ghlin inférieur à 1 mm 40 % en poids
Quartzite de Villenauxe impalpable 7 % en poids

Après gâchage de ce béton avec 8,6 % d'eau, puis coulage, vibration et démoulage, les pièces obtenues ont les caractéristiques suivantes, déterminées après étuvage :

Masse volumique apparente 2,13 g · cm$^{-3}$
Porosité ouverte 16,8 %
Résistance à l'écrasement à froid 452 dN · cm$^{-2}$
Module de rupture à la flexion à froid 77 dN · cm$^{-2}$

Quelque soit le cas, l'adjuvant tensio-actif ou mouillant est facultatif. Il est utile, par exemple, pour l'obtention de pièces ayant des formes compliquées, avec des moules qui ont des cales pour obtenir certains détails, car ce mouillant favorise l'évacuation des bulles d'air hors des surfaces, des angles et des arêtes.

Après cuisson, les pièces obtenues à partir des exemples 1 et 2 ci-dessus, ont des caractéristiques et une composition chimique tout-à-fait analogues à celles de briques façonnées (pressage ou damage) comme on le voit sur le tableau comparatif suivant :

| Caractéristiques | Exemple 1 de l'invention | Exemple 2 de l'invention | Brique de la technique connue en silice dense | Unités | Normes |
|---|---|---|---|---|---|
| Masse volumique apparente | 1,89 | 1,88 | 1,85 | g · cm$^{-3}$ | Afnor NF B40321 |
| Porosité ouverte | 18,5 | 18,4 | 19,78 | % | Afnor NF B40321 |
| Résistance à l'écrasement à froid | 555 | 725 | 1 031 | dN · cm$^{-2}$ | Afnor NF B49103 |
| Affaissement sous charge différentiel à chaud sous 19,61 N · cm$^{-2}$ — température à 0,5 % d'affaissement | 1 620 | 1 650 | 1 640 | °C | Afnor NF B49105 |
| — température à 5 % d'affaissement | 1 670 | 1 650 | 1 660 | °C | Afnor NF B49105 |
| Dilatation à 1 000 °C | 1,24 | 1,27 | 1,22 | % | Dilatomètre haute température |
| Analyse chimique : — SiO$_2$ | 93,04 | 94,70 | 95,32 | % | Afnor NF B49402 / Afnor NF B49420 |
| — Al$_2$O$_3$ | 0,95 | 0,85 | 0,89 | % | Afnor NF B49412 |
| — Fe$_2$O$_3$ | 1,52 | 0,71 | 0,56 | % | Afnor NF B49413 |
| — CaO | 4,02 | 2,92 | 2,60 | % | Afnor NF B49417 |
| Quartz résiduel | 1,20 | 1,50 | 1,25 | % | Diffraction X quantitative |

**0 007 269**

On note que les pièces cuites conformes à l'invention présentent une teneur en quartz résiduel qui est faible et qui doit de toutes façons, être au plus, égale à 10 % et de préférence, inférieure à 5 %. Dans les deux exemples ci-dessus, on voit que le quartz résiduel représente respectivement 1,20 % et 1,50 %.

Les caractéristiques obtenues avec un béton conforme à l'invention proviennent des effets rhéologiques dus à l'utilisation d'un plastifiant de grande surface spécifique et à la présence d'un défloculant qui est compatible avec le ciment Portland tout en restant actif en milieu aqueux.

On constate qu'après étuvage, les pièces présentent des résistances fortes pour une teneur en ciment très faible et cela est obtenu en raison de la réaction du type pouzzolanique liée à la réaction entre la silice micronisée et la portlandite libérée lors de la prise du ciment Portland.

On voit que grâce à l'invention, on peut réaliser un béton à partir d'une composition pulvérulente et d'un agrégat de silice qui conduit à des pièces pré-cuites dont les caractéristiques sont analogues à celles des pièces actuelles mais, cela, sans devoir supporter les inconvénients des pâtes sèches.

On obtient donc une grande facilité d'emploi, un prix de revient abaissé, un nombre de rebuts moindre et la possibilité de mouler des pièces de grandes dimensions et/ou de formes complexes, ce qui était impossible jusqu'à ce jour.

L'invention n'est pas limitée aux seuls modes de réalisation décrits mais en embrasse au contraire toutes les variantes.

**Revendications**

1. Composition pulvérulente, pour utilisation dans la fabrication de béton réfractaire, comprenant un liant hydraulique, un minéralisateur, un plastifiant constitué de silice fine et un défloculant, caractérisée en ce qu'elle contient au plus 10 % d'alumine en poids, que le liant hydraulique est présent à raison d'au plus 65 % en poids, que le minéralisateur est choisi parmi ceux qui favorisent les transformations minéralogiques de la silice, dans une proportion comprise entre 10 et 60 % en poids, que le plastifiant est une silice dont les grains ont une surface spécifique d'au moins $0,8 \, m^2 \cdot g^{-1}$ mesurée par la méthode de Blaine dans la proportion de 10 à 80 % en poids, que le défloculant est stable en présence du liant hydraulique et du minéralisateur et qu'il est actif en milieu aqueux de pH compris entre 10,5 et 13, ce défloculant étant présent dans la proportion d'au moins 0,6 % en poids.

2. Composition selon la revendication 1, caractérisée en ce que le minéralisateur est constitué, au moins en partie, par une fraction du liant hydraulique.

3. Composition selon la revendication 2, caractérisée en ce que le liant hydraulique est du type ciment Portland et que le minéralisateur est constitué en partie par des composés de calcium provenant du ciment et en partie par au moins un autre élément choisi parmi les minéralisateurs favorisant les transformations minéralogiques de la silice tel que l'oxyde de fer.

4. Composition selon la revendication 2, caractérisée en ce que le liant hydraulique est du type ciment Portland et que le minéralisateur n'est constitué que par des composés de calcium provenant du ciment.

5. Composition selon la revendication 1, caractérisée en ce que le défloculant appartient à la famille de polynaphtylméthanes sulfonates.

6. Béton réfractaire comprenant la composition selon l'une quelconque des revendications ci-dessus et un agrégat sec de silice naturelle, dont la teneur en silice exprimée en $SiO_2$ est au moins égale à 90 %, la composition représentant au plus 20 % environ du poids total du béton réfractaire pour que la chaux soit présente à raison d'au plus 3,5 % du poids total de béton, et l'alumine à raison d'au plus 2 %.

7. Béton réfractaire selon la revendication 6 ci-dessus, caractérisé en ce qu'il comprend les composants ci-après, les proportions indiquées se rapportant au poids total du béton :

| | |
|---|---|
| — Liant hydraulique : | |
| Ciment Portland | 3 à 7 % |
| — Minéralisateur : | |
| Composés de calcium inclus dans le ciment | — |
| Addition d'oxyde de fer en poudre (exprimé en $Fe_2O_3$) | 0,2 à 3 % |
| — Plastifiant : | |
| Silice fine de surface spécifique Blaine au moins égale à $0,8 \, m^2 \cdot g^{-1}$ | 2 à 8 % |
| — Défloculant : | |
| Polynaphtylméthane sulfonate de sodium | 0,1 à 3 % |
| — Agrégat : | |
| Silice naturelle | 83 à 95 % |

8. Béton réfractaire selon la revendication 6 ci-dessus, caractérisé en ce qu'il comprend les composants ci-après, les proportions indiquées se rapportant au poids total du béton :

| | |
|---|---|
| — Liant hydraulique : | |
| Ciment Portland | 4 à 8 % |

7

— Minéralisateur
Composé de calcium                          inclus dans le ciment.

— Plastifiant :
Silice fine de surface spécifique Blaine au moins égale à 0,8 m$^2 \cdot$ g$^{-1}$     2 à 8 %

— Défloculant :
Polynaphtylméthane sulfonate de sodium           0,1 à 3 %

— Agrégat :
Silice naturelle                     83 à 95 %

9. Procédé pour l'obtention d'une pièce en béton réfractaire qui consiste à gâcher un béton selon l'une quelconque des revendications 6 à 8 ci-dessus avec de l'eau, puis à couler et vibrer ce mélange dans un moule, puis à démouler la pièce.

10. Procédé selon la revendication 9 ci-dessus, caractérisé en ce que la pièce est cuite et présente une teneur en quartz résiduel au plus égale à 10 % et de préférence inférieure à 5 %.

11. Enceinte thermique réalisée par assemblage de pièces obtenues selon le procédé de la revendication 10.

## Claims

1. Powdery composition for use in the production of refractory concrete, comprising a hydraulic bonding agent, a mineralisator, a plasticizer consisting of fine silica, and a deflocculant, characterized in that, it contains not more than 10 wt.% of alumina, that the hydraulic bonding agent is present in a proportion of not more than 65 wt.%, that the mineralisator is selected among those which favour the mineralogical transformations of the silica, in a proportion ranging between 10 and 60 wt.%, that the plasticizer is a silica the grains of which have a specific surface of at least 0.8 m$^2$/g as measured by the Blaine method, in a proportion of 10 to 80 wt.%, that the deflocculant is stable in the presence of the hydraulic bonding agent and the mineralisator and that it is active in aqueous medium of pH ranging between 10.5 and 13, said deflocculant being present in the proportion of at least 0.6 wt.%.

2. Composition according to claim 1, characterized in that the mineralisator consists at least in part of a fraction of the hydraulic bonding agent.

3. Composition according to claim 2, characterized in that the hydraulic bonding agent is of the Portland cement type and that the mineralisator consists partly of calcium compounds originating from the cement and partly of at least another element selected among the mineralisators favouring the mineralogical transformations of the silica, such as the iron oxide.

4. Composition according to claim 2, characterized in that the hydraulic bonding agent is of the Portland cement type and that the mineralisator consits entirely of calcium compounds originating from the cement.

5. Composition according to claim 1, characterized in that the deflocullant belongs to the family of polynaphtylmethane sulfonates.

6. Refractory concrete comprising the composition according to anyone of the above claims and a dry aggregate of natural silica the silica content of which, expressed as SiO$_2$, is at least equal to 90 %, wherein the composition represents not more than about 20 % of the total weigth of the refractory concrete so that the lime is present in a proportion of not more than 3.5 % of the total weight of concrete and the alumina in a proportion of not more than 2 %.

7. Refractory concrete according to the above claim 6, characterized in that it comprises the components hereinafter, the proportions indicated relating to the total weigth of the concrete :

— hydraulic bonding agent :
Portland cement                        3 to 7 %

— mineralisator :
calcium compounds included in the cement/addition of iron oxide as
    powder (expressed as Fe$_2$O$_3$)            0.2 to 3 %

— plasticizer :
fine silica of specific surface Blaine at least equal to 0.8 m$^2$/g     2 to 8 %

— deflocculant :
sodicium polynaphthylmethane sulfonate         0.1 to 3 %

— aggregate :
natural silica                       83 to 95 %

8. Refractory concrete according to the above claim 6, characterized in that it comprises the components hereinafter, the proportions indicated relating to the total weight qf the concrete :

— hydraulic bonding agent :
Portland cement                        4 to 8 %

— mineralisator :

|  | |
|---|---|
| calcium compound | included in the cement |
| — plasticizer : | |
| fine silica of specific surface Blaine at least equal to 0,8 m²/g | 2 to 8 % |
| — deflocculant : | |
| sodium polynaphtylmetane sulfonate | 0.1 to 3 % |
| — aggregate : | |
| natural silica | 83 to 95 % |

9. Process for obtaining a piece of refractory concrete, which consists of preparing a concrete according to anyone of the above claims 6 to 8 together with water, then pouring and vibrating this mixture in a mold, then removing the piece from the mold.

10. Process according to the above claim 9, characterized in that the piece is baked and presents a content of residual quartz of not more than 10 % and preferably lower than 5 %.

11. Thermal enclosure made by assembly pieces obtained according to the process of claim 10.

**Ansprüche**

1. Pulverförmige Zusammensetzung zur Verwendung bei der Herstellung von feuerfestem Beton, mit einem hydraulischen Bindemittel, einem Mineralisator, einem aus feinem Siliziumdioxid bestehenden Plastizierungsmittel und einem Entflocker, dadurch gekennzeichnet, daß sie höchstens 10 Gew.% Aluminiumoxid enthält, daß das hydraulische Bindemittel zu höchstens 65 Gew.% vorliegt, daß der Mineralisator unter denen, die die mineralogischen Umwandlungen des Siliziumdioxids begünstigen, in einem Anteil zwischen 10 und 60 Gew.% gewählt ist, daß das Plastizierungsmittel ein Siliziumdioxid, dessen Körner eine nach dem Blaine-Verfahren gemessene spezifische Oberfläche von wenigstens 0,8 m²/g in einem Anteil von 10 bis 80 Gew.% ist, daß der Entflocker in Gegenwart des hydraulischen Bindemittels und des Mineralisators stabil ist und daß er in wässerigem Medium mit zwischen 10,5 und 13 liegendem pH-Wert aktiv ist, welcher Entflocker im Anteil von wenigstens 0,6 Gew.% anwesend ist.

2. Zusammensetzung nach dem Anspruch 1, dadurch gekennzeichnet, daß der Mineralisator wenigstens zum Teil aus einem Anteil des hydraulischen Bindemittels gebildet ist.

3. Zusammensetzung nach dem Anspruch 2, dadurch gekennzeichnet, daß das hydraulische Bindemittel vom Portland-Zementtyp ist und daß der Mineralisator zum Teil aus vom Zement stammenden Kalziumverbindungen und zum Teil aus wenigstens einem anderen Element besteht, das unter den Mineralisatoren, die die mineralogischen Umwandlungen des Siliziumdioxids begünstigen, wie zum Beispiel dem Eisenoxid, besteht.

4. Zusammensetzung nach dem Anspruch 2, dadurch gekennzeichnet, daß das hydraulische Bindemittel vom Portland-Zementtyp ist und daß der Mineralisator nur aus vom Zement stammenden Kalziumverbindungen besteht.

5. Zusammensetzung nach dem Anspruch 1, dadurch gekennzeichnet, daß der Entflocker zur Gruppe von Polynaphtylmethansulfonaten gehört.

6. Feuerfester Beton, der die Zusammensetzung nach irgendeinem der vorstehenden Ansprüche und einen trockenen Zuschlagstoff aus natürlichem Siliziumdioxid enthält, dessen in $SiO_2$ ausgedrückter Siliziumdioxidgehalt wenigstens gleich 90 % ist, wobei die Zusammensetzung höchstens etwa 20 % des Gesamtgewichts des feuerfesten Betons darstellt, damit der Kalk in einem Anteil von höchstens 3,5 % des Gesamtgewichts des Betons und das Aluminiumoxid in einem Anteil von höchstens 2 % vorliegen.

7. Feuerfester Beton nach dem vorstehenden Anspruch 6, dadurch gekennzeichnet, daß er die folgenden Bestandteile aufweist, wobei sich die angegebenen Anteile auf das Gesamtgewicht des Betons beziehen :

|  | |
|---|---|
| — Hydraulisches Bindemittel : | |
| Portland-Zement | 3 bis 7 % |
| — Mineralisator : | |
| Im Zement enthaltene Kalziumverbindungen/Zusatz von pulverförmigem | |
| Eisenoxid (als $Fe_2O_3$ ausgedrückt) | 0,2 bis 3 % |
| — Plastizierungsmittel : | |
| Feines Siliziumdioxid mit einer spezifischen Blaine-Oberfläche von wenigstens gleich 0,8 m²/g | 2 bis 8 % |
| — Entflocker : | |
| Natriumpolynaphtylmethan-Sulfonat | 0,1 bis 3 % |
| — Zuschlagstoff : | |
| Natürliches Siliziumdioxid | 83 bis 95 % |

8. Feuerfester Beton nach dem obigen Anspruch 6, dadurch gekennzeichnet, daß er die folgenden Bestandteile aufweist, wobei sich die angegebenen Anteile auf das Gesamtgewicht des Betons beziehen :

|  | |
|---|---|
| — Hydraulisches Bindemittel : | |
| Portland-Zement | 4 bis 8 % |

**0 007 269**

— Mineralisator :
 Kalziumverbindung ........................................ im Zement enthalten
— Plastizierungsmittel :
 Feines Siliziumdioxid mit spezifischer Blaine-Oberfläche von wenigstens 0,8 m²/g ........................................ 2 bis 8 %
— Entflocker :
 Natriumpolynaphthylmethan-Sulfonat ........................................ 0,1 bis 3 %
— Zuschlagstoff :
 Natürliches Siliziumdioxid ........................................ 83 bis 95 %.

9. Verfahren zum Erhalten eines Stücks aus feuerfestem Beton, das darin besteht, einen Beton nach irgendeinem der vorstehenden Ansprüche 6 bis 8 mit Wasser anzumachen, dann dieses Gemisch in eine Form zu gießen und darin in Schwingungen zu versetzen, dann das Stück zu entformen.

10. Verfahren nach dem vorstehenden Anspruch 9, dadurch gekennzeichnet, daß das Stück gebrannt wird und einen Gehalt an Restquarz von höchstens 10 % und vorzugsweise unter 5 % aufweist.

11. Wärmeeinfassung, die durch Zusammenbau von nach dem Verfahren des Anspruchs 10 erhaltenen Stücken hergestellt ist.